# EUROPÄISCHE PATENTANMELDUNG

(11) **EP 2 447 559 A2**
(43) Veröffentlichungstag der Anmeldung: **02.05.2012**
(21) Anmeldenummer: 11008247.6
(22) Anmeldetag: 13.10.2011
(51) Int. Cl.: F16D 1/06, F16D 1/072

(54) **Axial gesicherte Welle-Nabe-Verbindung**

(30) Priorität: 30.10.2010 DE 102010050168
(71) Anmelder: Volkswagen Aktiengesellschaft, 38436 Wolfsburg (DE)
(72) Erfinder: Huk, André, 38110 Braunschweig (DE); Richter, Benjamin, 38118 Braunschweig (DE)

(57) **Zusammenfassung**

Eine axial gesicherte Welle-Nabe-Verbindung umfassend eine Welle (101) mit einer umlaufenden Ringnut (103), eine an der Welle (101) angeordnete Nabe (102), sowie einen Befestigungsring (104), der mit der Ringnut (103) der Welle (101) verpresst ist und die Nabe (102) axial abstützt. Die Nabe (102) weist eine Fase (106) auf, die zur Radialrichtung der Nabe (102) mit einem Anstellwinkel (α) ungleich Null angewinkelt ist. Die Ringnut (103) der. Welle (101) weist eine erste Flanke (107) aufweist, die mit einem der Fase (106) der Nabe (102) korrespondierendem Anstellwinkel (β) zur Radialrichtung der Nabe (102) angewinkelt ist. Der Befestigungsring (104) ist zwischen der angewinkelten Fase (106) und der in gleicher Weise angewinkelten ersten Flanke (107) der Ringnut (103) der Welle (101) eingepresst, so dass sich dieser an der Fase (106) und der ersten Flanke (107) der Ringnut (103) abstützt. Hierdurch wird eine kostengünstige axial spielfreie Befestigung einer Nabe an einer Welle erzielt, die sich durch eine hohe axiale Tragfähigkeit auszeichnet. Die axial gesicherte Welle-Nabe-Verbindung eignet sich zur Axialsicherung eines Wälzlagerinnenrings an einer Kugelgewindemutter in einer elektromechanischen Lenkung.

## Beschreibung

Die Erfindung bezieht sich auf eine axial gesicherte Welle-Nabe-Verbindung, umfassend eine Welle mit einer umlaufenden Ringnut, eine an der Welle angeordnete Nabe, sowie einen Befestigungsring, der mit der Ringnut der Welle verpresst ist und die Nabe axial abstützt.

Eine derartige Welle-Nabe-Verbindung ist aus der DE 2 204 831 A bekannt. Mit einer solchen Welle-Nabe-Verbindung lässt sich eine Nabe spielfrei auf einer Welle festlegen, da durch die Umformung des Befestigungsrings jegliches Spiel in Axialrichtung aufgehoben wird. Bei der bekannten Welle-Nabe-Verbindung besteht jedoch das Problem, dass bei hohen Axialkräften der Befestigungsring gesprengt werden kann.

Vor diesem Hintergrund liegt der Erfindung die Aufgabe zu Grunde, die Tragfähigkeit einer derartigen Welle-Nabe-Verbindung weiter zu verbessern, so dass diese beispielsweise in einer elektromechanischen Fahrzeuglenkung zur Festlegung eines Wälzlagers an einer Kugelgewindemutter verwendet werden kann.

Diese Aufgabe wird durch eine axial gesicherte Welle-Nabe-Verbindung gemäß Patentanspruch 1 gelöst. Die erfindungsgemäße Welle-Nabe-Verbindung umfasst eine Welle mit einer umlaufenden Ringnut, eine an der Welle angeordnete Nabe, sowie einen Befestigungsring, der mit der Ringnut der Welle verpresst ist und die Nabe axial abstützt. Sie zeichnet sich dadurch aus, dass die Nabe eine Fase aufweist, die zur Radialrichtung der Nabe mit einem Anstellwinkel ungleich Null angewinkelt ist und die Ringnut der Welle eine erste Flanke aufweist, die mit einem der Fase der Nabe korrespondierenden Anstellwinkel zur Radialrichtung der Nabe angewinkelt ist, wobei der Befestigungsring zwischen der angewinkelten Fase und der in gleicher Weise angewinkelten Flanke der Ringnut der Welle eingepresst ist, so dass sich dieser an der Fase und der ersten Flanke der Ringnut abstützt.

Durch diese spezielle Abstimmung der Abstützflächen für den Befestigungsring wird die Tragfähigkeit gegenüber der aus der DE 2 204 831 A bekannten Lösung gesteigert, so dass sich sehr hohe Axialkräfte abstützen lassen. Insbesondere wird hierdurch der Befestigungsring in Umfangsrichtung im Wesentlichen frei von Zugspannungen gehalten. Der Befestigungsring wird vielmehr im Wesentlichen nur auf Druck belastet.

Die erfindungsgemäße Lösung gestattet zudem eine spielfreie Festlegung, da durch die Verformung des Befestigungsrings etwaige Fertigungstoleranzen problemlos ausgeglichen werden. Hierdurch lässt sich die Schnittstelle zwischen Welle und Nabe mit geringer Genauigkeit und damit kostengünstig fertigen. Auch der Befestigungsring ist ein in seiner Form einfaches und kostengünstig herstellbares Bauteil.

Für eine spielfreie Festlegung ist es besonders vorteilhaft, wenn der Anstellwinkel der ersten Flanke der Ringnut der Welle genauso groß ist wie der Anstellwinkel der Fase der Nabe.

Vorteilhafte Ausgestaltungen der Erfindung sind in weiteren Patentansprüchen angegeben.

Vorzugsweise füllt der Befestigungsring im verformten Zustand die Ringnut aus. Dies begünstigt eine hohe axiale Tragfähigkeit der Verbindung.

Gemäß einer bevorzugten Ausführungsform geht die angewinkelte erste Flanke der Ringnut im Nutgrund über eine Krümmung in eine zweite Flanke der Ringnut über. Die zweite Flanke erstreckt sich dabei zu der Fase der Nabe hin. Hierdurch werden kritische Spannungskonzentrationen im Bereich der Ringnut vermieden. Vorzugsweise ist zudem der Betrag des Anstellwinkels der ersten Flanke zur Radialrichtung kleiner als der Anstellwinkel der zweiten Flanke zur Radialrichtung. Dies gestattet vor allem auch eine einfache Herstellung der Ringnut.

Es hat sich gezeigt, dass für Anstellwinkel von Fase und erster Flanke zur Radialrichtung im Bereich von 20 bis 30 Grad eine besonders hohe Tragfähigkeit in Axialrichtung erzielt werden kann.

Für die zweite Flanke ist es im Hinblick auf eine besonders hohe Tragfähigkeit von Vorteil, wenn der Anstellwinkel zur Radialrichtung im Bereich von 25 bis 35 Grad liegt.

Eine weitere Optimierung der Tragfähigkeit lässt sich durch eine Abstimmung des Krümmungsradius im Nutgrund zur Nuttiefe erzielen. Vorzugsweise weist bei einem Wellendurchmesser von 20 bis 60 mm die Krümmung im Nutgrund bei einer Nuttiefe von 1,2 bis 2,0 mm einen Krümmungsradius im Bereich von 0,8 mm bis 1,5 mm auf.

Die vorstehend erläuterte Axialsicherung lässt sich dazu verwenden, eine Nabe auf einer Welle gegen einen Wellenabsatz festzulegen. In diesem Fall bildet die Welle einen Wellenabsatz als Axialanschlag für die Nabe aus.

Es ist jedoch auch möglich, eine Nabe beidseits durch Befestigungsringe auf einer Welle zu sichern. Hierzu weist die Welle zwei Ringnuten beidseits der Nabe auf. Die Nabe ist dann durch zwei mit den Ringnuten verpresste Befestigungsringe axial auf der Welle festgelegt.

In einer bevorzugten Ausführungsvariante dient die vorstehend erläuterte Axialsicherung dazu, ein Wälzlager an einer Kugelgewindemutter axial festzulegen. In diesem Fall ist die Welle die Kugelgewindemutter und die Nabe ein Innenring des Wälzlagers. Jedoch sind auch andere Einsatzzwecke möglich, bei denen hohe Axialkräfte auftreten. Beispielsweise kann ein Ritzel in gleicher Art und Weise an einer Welle gesichert werden.

Die vorstehend erläuterte Erfindung entstand im Kontext mit den besonderen Anforderungen an elektromechanische Lenkungen, welche im Übertragungsweg zwischen einer Motorwelle eines Elektromotors und einem Spindelabschnitt einer Zahnstange der Lenkung eine in einem Lenkgetriebegehäuse abgestützte Kugelgewindemutter umfassen.

Die Erfindung ermöglicht insbesondere eine elektromechanische Lenkung mit einem Kugelgewindetrieb, dessen Kugelgewindemutter über ein Wälzlager an einem Lenkgetriebegehäuse drehbar gelagert und axial festgelegt ist, wobei ein Innenring des Wälzlagers mittels einer axial gesicherte Welle-Nabe-Verbindung der vorstehend erläuterten Art an einem Außenumfangsabschnitt der Kugelgewindemutter befestigt ist, derart, dass die Kugelgewindemutter die Welle und der Innenring die Nabe der Welle-Nabe-Verbindung darstellt.

Hierdurch wird mit geringem Aufwand eine axial spielfreie Befestigung des Wälzlagers an der Kugelgewindemutter erzielt, was mit herkömmlichen Lösungen bisher nur sehr aufwändig realisiert werden konnte. Eine solche spielfreie Befestigung ist jedoch für die Lebensdauer und das Betriebsverhalten einer elektromechanischen Lenkung von großer Bedeutung, so dass durch die erfindungsgemäße Lösung hier ein merklicher Fortschritt erzielt wird.

Nachfolgend wird die Erfindung anhand eines in der Zeichnung dargestellten Ausführungsbeispiels näher erläutert. Die Zeichnung zeigt in:
- Figur 1: eine schematische Darstellung einer elektromechanischen Lenkung mit Kugelgewindetrieb,
- Figur 2: eine Detailansicht des Kugelgewindetriebs einschließlich Lagerung,
- Figur 3: eine Längsschnittansicht der Kugelgewindemutter mit montiertem Wälzlager und Befestigungsring,
- Figur 4: eine Detailansicht der Ringnut der Welle bzw. Kugelgewindemutter,
- Figur 5: eine Detailansicht des Befestigungsrings im verpressten Zustand,
- Figur 6: eine schematische Ansicht des zu sichernden Elements, beispielsweise eines Wälzlagers, vor dem Einbau, und in
- Figur 7: eine weitere Ausführungsform, bei der eine Welle durch zwei Befestigungsringe an einer Welle festgelegt ist.

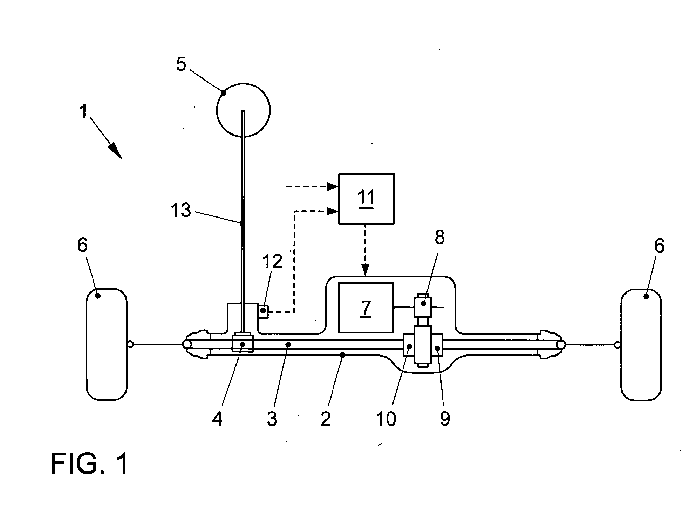

Die Erfindung steht im Kontext mit einer in Figur 1 schematisch dargestellten elektromechanischen Fahrzeuglenkung 1.

Die Lenkung 1 weist ein Lenkgetriebegehäuse 2 auf, durch das sich eine Lenkstange 3 erstreckt. An der Lenkstange 3 greift ein Lenkungsritzel 4 an, um einen vom Fahrer an einer Lenkungshandhabe 5 aufgebrachten Lenkbefehl an die Fahrzeugräder 6 zu übertragen. Weiterhin weist die Lenkung einen Elektromotor 7 zur Erzeugung eines Lenkunterstützungsmoments auf. Der Elektromotor 7 kann, wie dargestellt, achsparallel zur Lenkstange 3 angeordnet sein. Es ist jedoch auch möglich, den Elektromotor 7 koaxial zur Lenkstange 3 oder gegebenenfalls auch an anderer Stelle, beispielsweise an einer Lenksäule, anzuordnen.

Bei dem dargestellten Ausführungsbeispiel wird das Antriebsmoment des Elektromotors 7 über eine Getriebestufe 8 und einen Kugelgewindetrieb 9 als Axialkraft an der Lenkstange 3 zur Wirkung gebracht. Die Getriebestufe 8 ist hier beispielhaft als Riementrieb ausgebildet, wobei ein erstes Riemenrad an einer Abtriebswelle des Elektromotors 7 und ein zweites Riemenrad an einer Kugelgewindemutter 10 des Kugelgewindetriebs 9 angeordnet ist. Über den Kugelgewindetrieb 9 wird ein rotatorisches Antriebsmoment des Elektromotors 7 in eine translatorische Bewegungskomponente an der Zahnstange 3 übersetzt, um den Fahrer beim Lenken zu unterstützen.

Zur Ansteuerung des Elektromotors 7 dient ein Lenkungssteuergerät 11, das ein Stellsignal für den Elektromotor 7 generiert und dazu unter anderem das vom Fahrer aufgebrachte Lenkmoment berücksichtigt. Dieses Lenkmoment kann beispielsweise mit einer Drehmomentmesseinheit 12 an einer Lenksäule 13 gemessen werden, welche die Lenkungshandhabe 5 mechanisch mit der Lenkstange 3 koppelt.

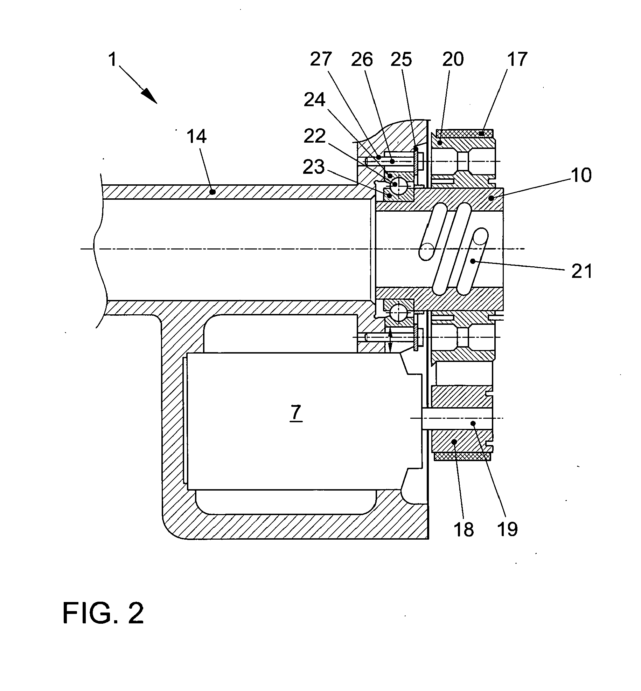

Figur 2 zeigt die Getriebestufe 8 sowie die Abstützung des Kugelgewindetriebs 9 innerhalb eines lediglich teilweise dargestellten Lenkgetriebegehäuses 2. Wie bereits erwähnt, kann die Getriebestufe 8 beispielsweise als Riementrieb ausgeführt sein. Bei dem dargestellten Ausführungsbeispiel umfasst der Riementrieb einen Riemen 17, ein antreibendes Riemenrad 18, das fest mit einer Abtriebswelle 19 des Motors 7 gekoppelt ist, sowie ein angetriebenes Riemenrad 20, das fest mit der Kugelgewindemutter 10 des Kugelgewindetriebs 9 gekoppelt ist. Die Kugelgewindemutter 10, die an ihrem Innenumfang gewindeartige Kugellaufrillen 21 ausbildet, steht dabei mit der Lenkstange 3 über nicht näher dargestellte Kugeln in Gewindeeingriff und ist in dem Lenkgetriebegehäuse 2 über ein Wälzlager 22 drehbar gelagert und axial festgelegt.

Das Wälzlager 22 weist einen Innenring 23 und einen Außenring 24 auf.

Zur Festlegung des Außenrings 24 des Wälzlagers 22 dient hier beispielhaft eine Lagerklemmscheibe 25, welche mittels Spannbolzen 26 mit dem Lenkgetriebegehäuse 2 verspannt ist. Die Lagerklemmscheibe 25 ist ein einfacher Ring, der beispielsweise aus Blech ausgestanzt ist. Sie weist für Spannbolzen 17 entsprechende Durchgangsöffnungen auf, welche mit Befestigungsöffnungen 27 des Lenkgetriebegehäuses 2 korrespondieren. Der Außenring 24 des Wälzlagers 22 kann jedoch auch auf andere Art und Weise im Lenkgetriebegehäuse 2 festgelegt werden.

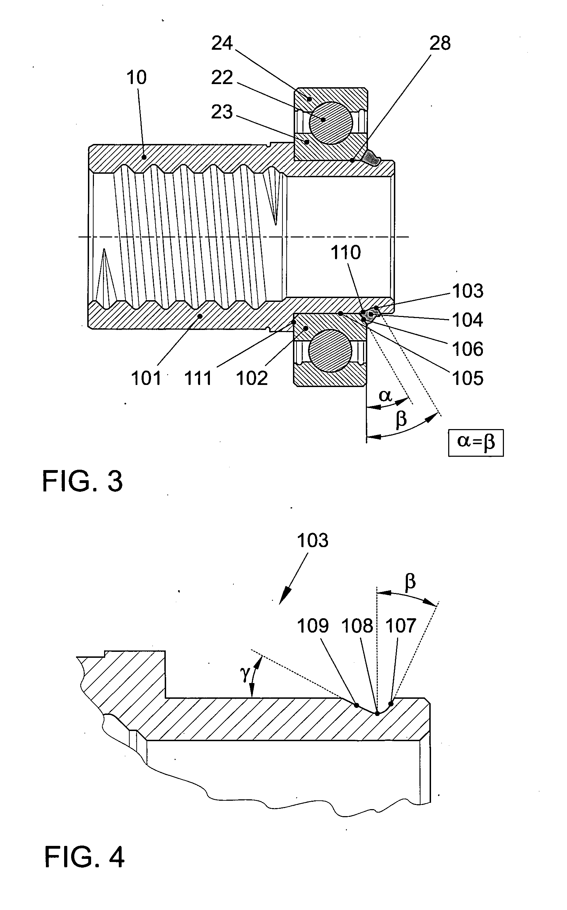

Die Befestigung des Innenrings 23 des Wälzlagers 22 soll nachfolgend anhand der Figuren 3 bis 5 näher erläutert werden. Hierzu dient eine spezielle axial gesicherte Welle-Nabe-Verbindung, welche zum einen eine spielfreie Festlegung des Innenrings 23 an einem Außenumfangsabschnitt 28 der Kugelgewindemutter 10 ermöglicht und zum anderen eine hohe axiale Tragfähigkeit besitzt.

Bei dem dargestellten Ausführungsbeispiel stellt die Kugelgewindemutter 10 die Welle 101 und der Innenring 23 des Wälzlagers 22 die Nabe 102 der im Folgenden erläuterten Welle-Nabe-Verbindung dar.

Die Welle 101 weist eine umlaufende Ringnut 103 auf, mit der ein Befestigungsring 104 verpresst ist. Der Befestigungsring 104 ist somit in der Ringnut 103 festgelegt und stützt die an der Welle 101 angeordnete Nabe 102 axial ab.

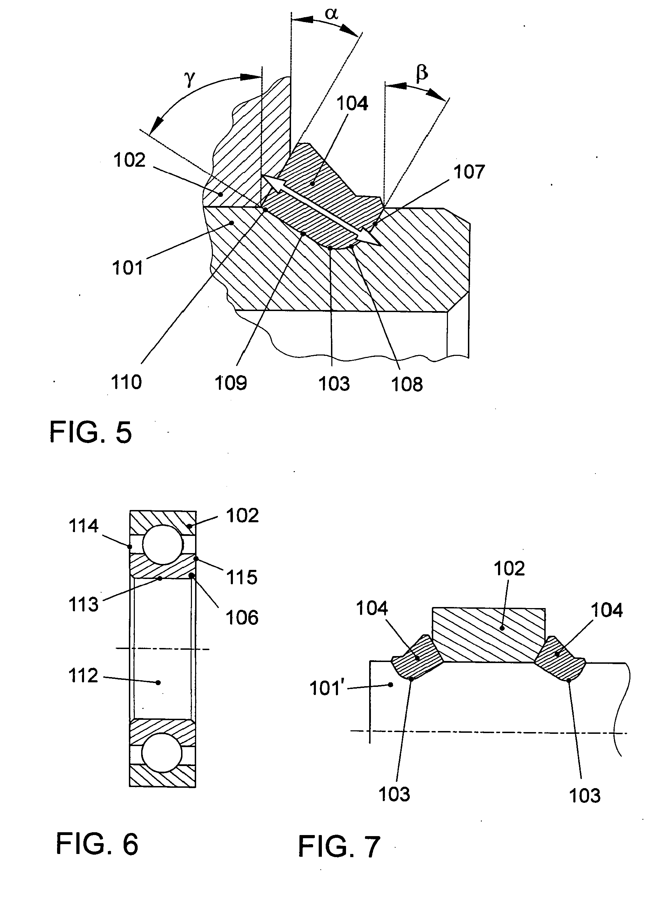

Die Nabe 102 weist an ihrer zu dem Befestigungsring 104 weisenden Stirnseite im Bereich ihrer Durchgangsöffnung 105 eine Fase 106 auf. Diese Fase 106 ist zur Radialrichtung der Nabe 102 mit einem Anstellwinkel α angewinkelt. Der Anstellwinkel α ist jedenfalls ungleich null und liegt vorzugsweise im Bereich von 20 bis 30 Grad. Figur 6 zeigt beispielhaft eine Nabe 102 in Form eines Wälzlagers. Die Innenumfangsfläche 113 sowie die Stirnseiten 114 und 115 der Nabe 102 sind vorzugsweise hartbearbeitet und weisen eine Rauhtiefe Ra von 0,8 bis 3,2, vorzugsweise von 1,6 auf. Im Fall eines Wälzlagers befinden sich die genannten Flächen an einem aus Wälzlagerstahl gefertigten Innen- und Außenring des Lagers.

Die Ringnut 103 der Welle 101 weist eine der Fase 106 axial gegenüberliegende erste Flanke 107 auf, die mit dem gleichen Anstellwinkel β wie die Fase 106 der Nabe 102 zur Radialrichtung der Nabe 102 angeordnet ist. Die erste Flanke 107 der Ringnut 103 geht im Nutgrund über eine Krümmung 108 in eine zweite Flanke 109 der Ringnut 103 über.

Die zweite Flanke 109 verläuft bis zu der Fase 106 der Nabe 102 hin und endet vorzugsweise an der zwischen Fase 106 und Durchgangsöffnung 105 gebildeten Umlaufkante 110 der Nabe 102. Der Anstellwinkel der zweiten Flanke 109 zur Radialrichtung ist mit γ bezeichnet und liegt vorzugsweise im Bereich von 25 bis 35 Grad. Vorzugsweise ist der Anstellwinkel γ der zweiten Flanke 109 dem Betrag nach größer als der Anstellwinkel β der ersten Flanke 107.

Der zwischen der angewinkelten Fase 106 und der in gleicher Weise angewinkelten ersten Flanke 107 in die Ringnut 103 eingepresste Befestigungsring 104 stützt sich somit an der Fase 106 der Nabe 102 und der ersten Flanke 107 der Ringnut 103 ab, wobei der umgeformte Befestigungsring 104, wie in Figur 5 gezeigt, die Ringnut 103 vollständig ausfüllt. Durch die gleichen Anstellwinkel α und β von Fase 106 und erster Flanke 107 ist der Befestigungsring 104 in Umfangsrichtung im Wesentlichen frei von Zugspannungen, die ihn ansonsten sprengen könnten. Der Befestigungsring 104 wird im Wesentlichen nur durch Druckspannungen belastet. Zudem werden am Befestigungsring 104 und der Ringnut 103 nahezu unvermeidlich auftretende Spannungskonzentrationen gering gehalten.

Für eine optimale Wirkung in Axialrichtung empfiehlt es sich ferner, die Abmessungen der Ringnut 103 nicht nur hinsichtlich der oben beschriebenen Winkel, sondern auch hinsichtlich der Krümmung 108 im Nutgrund sowie der Nuttiefe T aufeinander abzustimmen, wobei dies auch vom Wellendurchmesser abhängig ist. Bei Wellendurchmessern in der Größenordnung von 20 bis 60 mm empfiehlt sich für die Krümmung 108 im Nutgrund ein Krümmungsradius R im Bereich von 0,8 mm bis 1,5 mm bei einer Nuttiefe T von 1,2 bis 2,0 mm.

Bei dem dargestellten Ausführungsbeispiel bildet die Welle 101 einen Wellenabsatz 111 als Axialanschlag für die Nabe 102 aus, so dass sich die Nabe 102 in einer ersten Axialrichtung gegen den Wellenabsatz 111 und in einer entgegengesetzten zweiten Axialrichtung gegen den Befestigungsring 104 abstützt. Dabei ist die Nabe 102 zwischen dem Wellenabsatz 111 und dem Befestigungsring 104 spielfrei gehalten, da durch die Umformung des Befestigungsrings 104 bei der Montage jegliches Axialspiel aufgehoben wird.

Der Befestigungsring 104 ist im unverformten Zustand, das heißt vor seiner Montage in der Ringnut 103 als einfacher rotationssymmetrischer Körper ausgestaltet, der, wie beispielhaft in Figur 6 gezeigt, einen rechteckigen Profilquerschnitt, jedoch auch andere Profilquerschnittformen aufweisen kann. Im nicht montierten Zustand weist der Befestigungsring 104 eine Durchgangsöffnung auf, deren Innendurchmesser zu dem Außendurchmesser der Welle 101 im Bereich der Ringnut 103 vorzugsweise mit einer Spielpassung toleriert ist. Der Befestigungsring 104 besteht aus einem umformbaren Material, vorzugsweise aus ungehärtetem Stahl.

In einer Abwandlung des dargestellten Ausführungsbeispiels kann eine Nabe 102' auf einer Welle 101' auch durch zwei Befestigungsringe 104 axial festgelegt sein, wobei dann, wie in Figur 7 dargestellt, die Nabe zwei Fasen 106 und die Welle zwei Ringnuten 103 der vorstehend erläuterten Art aufweist.

Die dargestellte axial gesicherte Welle-Nabe-Verbindung, wie sie in den Figuren 3 bis 7 dargestellt ist, lässt sich nicht nur zur Befestigung eines Innenrings 23 an einer Kugelgewindemutter 10 verwenden. Vielmehr kann diese überall dort zum Einsatz kommen, wo eine spielfreie Axialabstützung einer Nabe 102 an einer Welle 101 benötigt wird. Beispielsweise ist es möglich, auf entsprechende Art und Weise auch den Außenring 24 des Wälzlagers 22 im Lenkgetriebegehäuse 2 axial festzulegen.

Die Erfindung wurde vorstehend anhand eines Ausführungsbeispiels sowie verschiedener Abwandlungen näher erläutert. Sie ist jedoch nicht hierauf beschränkt, sondern umfasst alle durch die Patentansprüche definierten Ausgestaltungen.

### Bezugszeichenliste

- 1: Lenkung
- 2: Lenkgetriebegehäuse
- 3: Lenkstange
- 4: Lenkungsritzel
- 5: Lenkungshandhabe
- 6: Fahrzeugrad
- 7: Elektromotor
- 8: Getriebestufe
- 9: Kugelgewindetrieb
- 10: Kugelgewindemutter
- 11: Lenkungssteuergerät
- 12: Drehmomentsensor
- 13: Lenksäule
- 17: Riemen
- 18: antreibendes Riemenrad
- 19: Antriebswelle
- 20: angetriebenes Riemenrad
- 21: Kugellaufrillen
- 22: Wälzlager
- 23: Innenring
- 24: Außenring
- 25: Lagerklemmscheibe
- 26: Spannbolzen
- 27: Befestigungsöffnung
- 28: Außenumfangsabschnitt
- 101: Welle
- 102: Nabe
- 103: Ringnut
- 104: Befestigungsring
- 105: Durchgangsöffnung
- 106: Fase
- 107: erste Flanke
- 108: Krümmung
- 109: zweite Flanke
- 110: umlaufende Kante
- 111: Wellenabsatz
- 112: Durchgangsöffnung
- 113: Innenumfangsfläche
- 114: Stirnwand
- 115: Stirnwand
- R: Krümmungsradius
- T: Nuttiefe
- α: Anstellwinkel der Fase 106 zur Radialrichtung
- β: Anstellwinkel der ersten Flanke 107 zur Radialrichtung
- γ: Anstellwinkel der zweiten Flanke 109 zur Radialrichtung

## Patentansprüche

1. Axial gesicherte Welle-Nabe-Verbindung, umfassend
eine Welle (101) mit einer umlaufenden Ringnut (103),
eine an der Welle (101) angeordnete Nabe (102), sowie
einen Befestigungsring (104), der mit der Ringnut (103) der Welle (101) verpresst ist und die Nabe (102) axial abstützt,
**dadurch gekennzeichnet, dass**
die Nabe (102) eine Fase (106) aufweist, die zur Radialrichtung der Nabe (102) mit einem Anstellwinkel (α) ungleich Null angewinkelt ist, und
die Ringnut (103) der Welle (101) eine erste Flanke (107) aufweist, die mit einem der Fase (106) der Nabe (102) korrespondierenden Anstellwinkel (β) zur Radialrichtung der Nabe (102) angewinkelt ist,
wobei der Befestigungsring (104) zwischen der angewinkelten Fase (106) und der in gleicher Weise angewinkelten ersten Flanke (107) der Ringnut (103) der Welle (101) eingepresst ist, so dass sich dieser an der Fase (106) und der ersten Flanke (107) der Ringnut (103) abstützt.

2. Axial gesicherte Welle-Nabe-Verbindung nach Anspruch 1, **dadurch gekennzeichnet, dass** der Befestigungsring (104) im verformten Zustand die Ringnut (103) ausfüllt.

3. Axial gesicherte Welle-Nabe-Verbindung nach Anspruch 1 oder 2, **dadurch gekennzeichnet, dass** die angewinkelte erste Flanke (107) der Ringnut (103) im Nutgrund über eine Krümmung (108) in eine zweite Flanke (109) der Ringnut (103) übergeht, die sich zu der Fase (106) der Nabe (102) hin erstreckt, wobei der Betrag des Anstellwinkels (β) der ersten Flanke (107) zur Radialrichtung kleiner ist als der Anstellwinkel (γ) der zweiten Flanke (109) zur Radialrichtung.

4. Axial gesicherte Welle-Nabe-Verbindung nach Anspruch 3, **dadurch gekennzeichnet, dass** bei einem Wellendurchmesser von 20 bis 60 mm die Krümmung (108) im Nutgrund bei einer Nuttiefe von 1,2 bis 2,0 mm einen Krümmungsradius im Bereich von 0,8 mm bis 1,5 mm aufweist.

5. Axial gesicherte Welle-Nabe-Verbindung nach Anspruch 3 oder 4, **dadurch gekennzeichnet, dass** der Anstellwinkel (γ ) der zweiten Flanke (109) zur Radialrichtung im Bereich von 25 bis 35 Grad liegt.

6. Axial gesicherte Welle-Nabe-Verbindung nach einem der Ansprüche 1 bis 5, **dadurch gekennzeichnet, dass** der Anstellwinkel (α, β) von Fase (106) und erster Flanke (107) zur Radialrichtung im Bereich von 20 bis 30 Grad liegt.

7. Axial gesicherte Welle-Nabe-Verbindung nach einem der Ansprüche 1 bis 6, **dadurch gekennzeichnet, dass** die Welle (101) einen Wellenabsatz (111) als Axialanschlag für die Nabe (102) ausbildet.

8. Axial gesicherte Welle-Nabe-Verbindung nach einem der Ansprüche 1 bis 6, **dadurch gekennzeichnet, dass** die Welle (101') zwei Ringnuten (103) beidseits der Nabe (102') aufweist und die Nabe (102') durch zwei mit den Ringnuten (103) verpresste Befestigungsringe (104) axial auf der Welle (101') festgelegt ist.

9. Axial gesicherte Welle-Nabe-Verbindung nach einem der Ansprüche 1 bis 8, **dadurch gekennzeichnet, dass** die Welle (101) eine Kugelgewindemutter (10) und die Nabe (102) ein Innenring (23) eines Wälzlagers (22) ist.

10. Elektromechanische Lenkung mit Kugelgewindetrieb (9), dessen Kugelgewindemutter (10) über ein Wälzlager (22) an einem Lenkgetriebegehäuse (2) drehbar gelagert und axial festgelegt ist, wobei ein Innenring (23) des Wälzlagers (22) mittels einer axial gesicherten Welle-Nabe-Verbindung nach einem der vorgenannten Ansprüche an einem Außenumfangsabschnitt (28) der Kugelgewindemutter (10) befestigt ist, derart, dass die Kugelgewindemutter (10) die Welle (101) und der Innenring (23) die Nabe (102) der Welle-Nabe-Verbindung darstellt.
